# EUROPÄISCHE PATENTSCHRIFT

(11) **EP 1 972 464 B1**
(45) Veröffentlichungstag und Bekanntmachung des Hinweises auf die Patenterteilung: **19.12.2012**
(21) Anmeldenummer: 08004908.3
(22) Anmeldetag: 17.03.2008
(51) Int. Cl.: B42D 15/00, B41M 3/14, B82Y 10/00, B82Y 30/00, B42D 15/10

(54) **Sicherheitselemente mit lumineszierenden Merkmalen**
Security elements with luminescent characteristics
Eléments de sécurité ayant des caractéristiques luminescentes

(30) Priorität: 23.03.2007 AT 4632007
(43) Veröffentlichungstag der Anmeldung: 24.09.2008
(73) Patentinhaber: Hueck Folien Ges.m.b.H., 4342 Baumgartenberg (AT)
(72) Erfinder: Schmidegg, Klaus, Dr., 4040 Linz (AT)
(74) Vertreter: Landgraf, Elvira

(56) Entgegenhaltungen:
- WO-A2-2004/089640
- WO-A2-2007/001438
- WO-A2-2007/041579
- US-A1- 2002 021 003

## Beschreibung

Die Erfindung betrifft Sicherheitselemente mit lumineszierenden Merkmalen, die eine erhöhte Fälschungssicherheit und Beständigkeit gewährleisten.

Sicherheitselemente in Form von Fäden, Streifen, Bändern, Patches oder anderen Formaten werden vor allem in Wertdokumenten, beispielsweise Banknoten, Ausweispapieren und dergleichen eingesetzt. Meist weisen diese Sicherheitselemente kombinierte Merkmale, beispielsweise optische Merkmale und/oder leitfähige Merkmale und/oder magnetische Merkmale auf.

Sicherheitselemente mit visuell sichtbaren Merkmalen sind beispielsweise aus EP - A 0 330 733 bekannt. Es sind Sicherheitselemente, insbesondere Sicherheitsfäden bestehend aus einer lichtdurchlässigen Kunststofffolie, einer sich über das gesamte Sicherheitselement erstreckenden opaken Beschichtung, die Aussparungen in Form der einzubringenden Kodierung, insbesondere in Form von Zeichen und Mustern aufweist, beschrieben. Zumindest in den durch die Aussparungen definierten Bereichen können deckungsgleich farbgebende und/oder lumineszierende Substanzen vorhanden sein, durch die sich die Codierung von der opaken Beschichtung unter entsprechendem Lichteinfluss in farblich kontrastierender Form unterscheidet.

Farben und Lacke mit lumineszierenden Eigenschaften enthalten anorganische oder organische fluoreszierende Pigmente oder Farbstoffe. Nachteil dieser klassischen fluoreszierenden Pigmente oder Farbstoffe ist, dass sie ein üblicherweise breitbandiges Lumineszenzspektrum und eine relativ schlechte Lichtechtheit aufweisen.

Aufgabe der Erfindung war es daher ein Sicherheitselement mit lumineszierenden Merkmalen bereitzustellen, die eine verbesserte Lichtechtheit und eine genau einstellbare Emissionswellenlänge aufweisen.

Gegenstand der Erfindung ist daher ein Sicherheitselement mit lumineszierenden Eigenschaften, aufweisend ein Trägersubstrat, gemäß Anspruch 1.

Als Trägersubstrat kommen beispielsweise flexible Kunststofffolien, beispielsweise aus PI, PP, OPP, PE, PPS, PEEK, PEK, PEI, PAEK, LCP, PEN, PBT, PET, PA, PC, COC, POM, ABS, PVC, PTFE, Fluorpolymere wie Teflon, PVB etc. in Frage.
Die Trägerfolien weisen vorzugsweise eine Dicke von 5 - 700 µm, bevorzugt 5 - 200 µm, besonders bevorzugt 5 - 50 µm auf.

Ferner können als Trägersubstrat auch Metallfolien, beispielsweise AI-, Cu-, Sn-, Ni-, Fe- oder Edelstahlfolien mit einer Dicke von 5 - 200 µm, vorzugsweise 10 bis 80 µm, besonders bevorzugt 20 - 50 µm dienen. Die Folien können auch oberflächenbehandelt, beschichtet oder kaschiert beispielsweise mit Kunststoffen oder lackiert sein.

Ferner können als Trägersubstrate auch Papier oder Verbunde mit Papier, beispielsweise Verbunde mit Kunststoffen mit einem Flächengewicht von 20 - 500 g/m², vorzugsweise 40 - 200 g/m² verwendet werden.

Ferner können als Trägersubstrate Gewebe oder Vliese, wie Endlosfaservliese, Stapelfaservliese und dergleichen, die gegebenenfalls vernadelt oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefaservliese eingesetzt werden. Die eingesetzten Gewebe oder Vliese weisen ein Flächengewicht von etwa 20 g/m² bis 500 g/m² auf. Gegebenenfalls können diese Gewebe oder Vliese oberflächenbehandelt sein.

Die Trägersubstrate können bereits zusätzlich eine Lackschicht aufweisen, die unstrukturiert oder strukturiert, beispielsweise geprägt sein kann. Die Lackschicht kann beispielsweise eine releasefähige Transferlackschicht sein, sie kann durch Strahlung, beispielsweise UV-Strahlung vernetzt oder vernetzbar sein und kratzfest und/oder antistatisch ausgerüstet sein. Geeignet sind sowohl wässrige als auch feste Lacksysteme, insbesondere auch Lacksysteme auf Basis Polyester-Acrylat oder Epoxyacrylat Kolophonium-, Acrylat-, Alkyd-, Melamin-, PVA-, PVC-, Isocyanat-, Urethansysteme, die konventionell oder reaktiv härtend Gemisch oder strahlungshärtend) sein können.

Auf das Trägersubstrat wird eine Beschichtung, die Nanopartikel von Halbleitern aufweist, aufgebracht. Solche Nanopartikel sind aus US 2002/0021003 bekannt.

Als geeignete Halbleiter kommen Elemente und deren Verbindungen der 11. - VI. Hauptgruppe in Frage, beispielsweise CdSe, ZnSe, CdS, ZnS, ZnO, PbSe (im infraroten Bereich) und dergleichen in Frage.
Diese Elemente bzw. Verbindungen können auch dotiert sein.
Als Dotierungselemente kommen alle bekannten Dotierungselemente, beispielsweise Cu, Mn und dergleichen in Frage.

Unter Nanokristallen werden hier Kristalle einer Größe von 1 bis 20 nm, vorzugsweise 2- 5 nm verstanden.

Die Verwendung von Nanokristallen aus Halbleitermaterialien hat deutliche Vorteile. Quanteneffekte bei den verwendeten Kristallgrößen von 10 bis 100 nm führen zu einer Verschiebung der Photolumineszenz-Emissionswellenlänge, die durch die verwendete Kristallgröße, bei ansonsten gleicher Materialzusammensetzung und Kristallmodifikation bewirkt wird.

Das bedeutet, dass das Intensitätsmaximum der Photolumineszenz durch die geeignete Auswahl der Kristallgröße definiert eingestellt werden kann und durch die schmale Halbwertsbreite auch genau abgegrenzt werden kann, wobei die Halbwertsbreite durch die Größenverteilung eingestellt werden kann.

Dadurch entsteht eine selektivere und eindeutigere Zuordenbarkeit des Sicherheitsmerkmals.

Durch eine geeignete Auswahl des Materials und der Größe können auch nicht sichtbare Wellenlängen emittiert werden, beispielsweise im infraroten Spektralbereich.
Dadurch entsteht ein für das menschliche Auge visuell nicht erkennbares Sicherheitsmerkmal, das nur durch geeignete Lesegeräte detektiert werden kann.

Durch Mischung verschieden großer Nanokristalle in derselben Matrix, ist es möglich einen charakteristischen Fluoreszenz-Fingerprint zu generieren, der gegebenenfalls sowohl sichtbare als auch nicht sichtbare (z. B. infrarote) Anteile aufweisen kann.

Darüber hinaus sind Halbleiter-Nanokristalle den bisher verwendeten anorganischen oder organischen Fluoreszenzfarben hinsichtlich der Langzeitstabilität überlegen, da sie nicht ausbleichen.

Als Lösungsmittel für die verwendeten Nanokristalle zur Herstellung einer verdruckbaren Beschichtungszusammensetzung kommen beispielsweise Wasser, Alkohole, Ester, Ketone, oder Aromate oder deren Gemische in Frage.

Je nach Anregung kann selektive Lumineszenz erzeugt werden.

Als Bindemittel können dann beispielsweise alle konventionellen Bindemittel wie Polyvinylchlorid, Polyvinylbutyrale, Polyamide, PVA, Acrylate und dergleichen verwendet werden.

Die Beschichtung kann in einem konventionellen Druckverfahren, beispielsweise im Tief-, Flexo-, Sieb-, Inkjet- oder Digitaldruck aufgebracht werden.

Das Trägersubstrat kann auch weitere funktionelle Schichten aufweisen oder es können weitere funktionelle Schichten auf die lumineszierende Beschichtung aufgebracht werden.

So können z.B. auch elektrisch leitfähige Schichten auf dem Substrat vorhanden sein, oder anschließend aufgebracht werden, beispielsweise elektrisch leitfähige polymere Schichten oder leitfähige Farb- oder Lackschichten.

Zur Einstellung der elektrischen Eigenschaften können der aufzubringenden Farbe bzw. dem aufzubringenden Lack, beispielsweise Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO, ATO, FTO und dergleichen zugegeben werden. Weiters können auch dotierte oder nicht dotierte Halbleiter wie beispielsweise Silicium, Germanium oder dotierte oder nicht dotierte polymere Halbleiter oder lonenleiter wie amorphe oder kristalline Metalloxide oder Metallsulfide als Zusatz verwendet werden. Ferner können zur Einstellung der elektrischen Eigenschaften der Schicht polare oder teilweise polare Verbindungen wie Tenside, oder unpolare Verbindungen wie Silikonadditive oder hygroskopische oder nicht hygroskopische Salze verwendet oder dem Lack zugesetzt werden.

Als Schicht mit elektrischen Eigenschaften kann auch eine vollflächige oder partielle Metallschicht aufgebracht werden, wobei die partielle Aufbringung mittels eines Ätzverfahrens (Aufbringung einer vollflächigen Metallschicht und anschließende partielle Entfernung durch Ätzen) oder mittels eine Demetallisierungsverfahrens erfolgen kann.

Bei Verwendung eines Demetallisierungsverfahrens wird in einem ersten Schritt vorzugsweise eine in einem Lösungsmittel lösliche Farbe (gegebenenfalls in Form einer inversen Codierung) aufgebracht, anschließend wird, gegebenenfalls nach Aktivierung des Trägersubstrats durch eine Plasma- oder Coronabehandlung, die metallische Schicht aufgebracht, worauf die lösliche Farbschicht durch Behandlung mit einem geeigneten Lösungsmittel samt der in diesen Bereichen vorhandenen Metallisierung abgelöst wird.

Ferner kann als elektrisch leitfähige Schicht auch eine elektrisch leitfähige Polymerschicht aufgebracht werden. Die elektrisch leitfähigen Polymeren können beispielsweise Polyanilin oder Polyethylendioxythiophen sein. Besonders bevorzugt wird als elektrisch leitfähiges Polymer PEDT/TS verwendet.

Es ist auch möglich der verwendeten Magnetfarbe, beispielsweise Ruß oder Graphit zuzusetzen, wodurch eine gleichzeitig magnetische als auch elektrisch leitfähige Schicht in definierter Codierung nach dem erfindungsgemäßen Verfahren besonders vorteilhaft herstellbar ist.

Ferner kommen als zusätzliche Sicherheitsmerkmale auch weitere Oberflächenreliefstrukturen, beispielsweise Beugungsgitter, Hologramme und dergleichen in Frage, wobei diese Strukturen gegebenenfalls auch metallisiert oder partiell metallisiert sein können.

Die optisch aktiven Strukturen werden dabei in einen strahlungshärtbaren Lack mittels einer Prägeform oder Prägewalze oder eines Prägestempels eingebracht werden.

Der strahlungshärtbare Lack kann beispielsweise ein strahlungshärtbares Lacksystem auf Basis eines Polyester-, eines Epoxy- oder Polyurethansystems das einen oder mehr verschiedene, dem Fachmann geläufige Photoinitiatoren enthält, die bei unterschiedlichen Wellenlängen eine Härtung des Lacksystems in unterschiedlichem Ausmaß initiieren können. So kann beispielsweise ein Photoinitiator bei einer Wellenlänge von 200 bis 400 nm aktivierbar sein, der zweite Photoinitiator dann bei einer Wellenlänge von 370 bis 600 nm aktivierbar. Zwischen den Aktivierungswellenlängen der unterschiedlichen Photoinitiatoren sollte genügend Differenz eingehalten werden, damit nicht eine zu starke Anregung des zweiten Photoinitiators erfolgt, während der erste Photoinitiator aktiviert wird. Der Bereich, in dem der zweite Photoinitiator angeregt wird, sollte im Transmissionswellenlängenbereich des verwendeten Trägersubstrats liegen. Für die Haupthärtung (Aktivierung des zweiten Photoinitiators) kann auch Elektronenstrahlung verwendet werden.

Als strahlungshärtbarer Lack kann auch ein wasserverdünnbarer Lack verwendet werden. Bevorzugt werden Lacksysteme auf Polyesterbasis.

Dabei sind die Nanokristalle auch dem strahlungshärtbaren Lack, in den diese optisch aktiven Elemente eingebracht, beigemischt, wodurch ein inhärentes Sicherheitsmerkmal entsteht.

Die erfindungsgemäßen Sicherheitselemente werden gegebenenfalls nach entsprechender Konfektionierung (beispielsweise zu Fäden, Bändern, Streifen, Patches oder anderen Formaten) daher als Sicherheitsmerkmale in Datenträgern, insbesondere Wertdokumenten wie Ausweisen, Karten, Banknoten oder Etiketten, Siegeln und dergleichen, aber auch in Verpackungsmaterialien für sensible Güter, wie Pharmazeutika, Kosmetika, Datenträger, elektronische Bauteile und dergleichen verwendet.

## Patentansprüche

1. Sicherheitselement mit lumineszierenden Eigenschaften, aufweisend ein Trägersubstrat mit einer vollflächigen oder partiellen Beschichtung, die Nanopartikel aus Halbleitermaterialien enthält, **dadurch gekennzeichnet, dass** das Sicherheitselement optisch aktive Elemente, wie Hologramme, Oberflächenstrukturen, Beugungsgitter, Kinegramme aufweist, wobei in den Prägelack der optisch aktiven Elemente Nanopartikel aus Halbleitermaterialien eingebracht und die optisch aktiven Elemente partiell metallisiert sind.

2. Sicherheitselement nach Anspruch 1, **dadurch gekennzeichnet, dass** die Größe der Nanopartikel 1- 10 nm beträgt.

3. Sicherheitselement nach einem der Ansprüche 1 oder 2, **dadurch gekennzeichnet, dass** als Halbleitermaterialien von Elementen und deren Verbindungen der II. - VI. Hauptgruppe verwendet werden.

4. Sicherheitselement nach einem der Ansprüche 1 bis 3, **dadurch gekennzeichnet, dass** als Halbleitermaterialien CdSe, ZnSe, CdS, ZnS, ZnO verwendet werden.

5. Sicherheitselement nach einem der Ansprüche 1 bis 4, **dadurch gekennzeichnet, dass** die Halbleitermaterialien dotiert sind.

6. Verwendung der Sicherheitselemente nach einem der Ansprüche 1 bis 5 als Sicherheitsmerkmale in Datenträgern, insbesondere Wertdokumenten wie Ausweisen, Karten, Banknoten oder Etiketten, Siegeln und dergleichen, aber auch in Verpackungsmaterialien für sensible Güter, wie Pharmazeutika, Kosmetika, Datenträger, elektronische Bauteile.

## Claims

1. Security element with luminescent properties, having a carrier substrate with a full-area or partial coating containing nanoparticles made of semiconductor materials, **characterized in that** the security element has optically active elements, such as holograms, surface structures, diffraction gratings, kinegrams, wherein nanoparticles made of semiconductor materials are introduced into the embossing varnish of the optically active elements and the optically active elements are partially metallized.

2. Security element according to Claim 1, **characterized in that** the size of the nanoparticles is 1-10 nm.

3. Security element according to either of Claims 1 and 2, **characterized in that** the semiconductor materials used are elements of main groups II-VI and their compounds.

4. Security element according to one of Claims 1 to 3, **characterized in that** the semiconductor materials used are CdSe, ZnSe, CdS, ZnS, ZnO.

5. Security element according to one of Claims 1 to 4, **characterized in that** the semiconductor materials are doped.

6. Use of the security elements according to one of Claims 1 to 5 as security features in data carriers, in particular valuable documents such as passes, cards, banknotes or labels, seals and the like, but also in packaging materials for sensitive goods such as pharmaceuticals, cosmetics, data carriers, electronic devices.

## Revendications

1. Élément de sécurité ayant des caractéristiques luminescentes présentant un substrat support doté d'un revêtement sur toute la surface ou bien partiel, comprenant des nanoparticules constituées de matériaux semi-conducteurs, **caractérisé en ce que** l'élément de sécurité comporte des éléments optiquement actifs, comme des hologrammes, des structures de surface, des grilles de diffraction, des cinégrammes, où, dans la laque de gaufrage des éléments optiquement actifs, des nanoparticules constituées de matériaux semi-conducteurs sont incorporés et les éléments optiquement actifs sont partiellement métallisés.

2. Élément de sécurité selon la revendication 1, **caractérisé en ce que** la taille des nanoparticules atteint 1 à 10 nm.

3. Élément de sécurité selon l'une des revendications 1 ou 2, **caractérisé en ce que** l'on utilise comme matériaux semi-conducteurs des éléments et leurs composés du groupe principal II à VI.

4. Élément de sécurité selon l'une des revendications 1 à 3, **caractérisé en ce que** l'on utilise comme matériaux semi-conducteurs CdSe, ZnSe, CdS, ZnS, ZnO.

5. Élément de sécurité selon l'une des revendications 1 à 4, **caractérisé en ce que** les matériaux semi-conducteurs sont dopés.

6. Utilisation des éléments de sécurité selon l'une des revendications 1 à 5 comme caractéristiques de sécurité dans des supports de données, en particulier des documents de valeur comme les papiers d'identité, les cartes, les billets de banque ou les étiquettes, les sceaux et similaires, mais aussi dans les matières d'emballage pour les denrées sensibles, comme les produits pharmaceutiques, les produits cosmétiques, les supports de données, les composants électroniques.
